# EUROPEAN PATENT APPLICATION

(11) **EP 1 229 356 A2**
(43) Date of publication of application: **07.08.2002**
(21) Application number: 02002196.0
(22) Date of filing: 29.01.2002
(51) Int. Cl.: G02B 5/28

(54) **Methods and apparatus for the production of optical filters**

(30) Priority: 31.01.2001 US 773433
(71) Applicant: PLANAR SYSTEMS, INC., Beaverton, Oregon 97006 (US)
(72) Inventor: Dickey, Eric, Beaverton, Oregon 97006 (US); Long, Tom, Portland, Oregon 97231 (US); Tornqvist, Runar Olof Ivar, 02700 Grankulla (FI)
(74) Representative: Hoarton, Lloyd Douglas Charles

(57) **Abstract**

Methods are provided for production of optical filters that include alternating exposures of a surface of a substrate to two or more precursors that combine to form a sublayer on the surface. A measurement light flux is provided to measure an optical property of the sublayer or an assemblage of sublayers. Based on the measurement, the number of sublayers is selected to produce an optical filter, such as a Fabry-Perot filter, having predetermined properties.

## Description

### Field of the Invention

The invention pertains to optical filters and fabrication methods and apparatus for such filters.

### Background

Thin film optical filters constructed of alternating layers of high-refractive-index and low-refractive-index materials have been developed for applications such as displays, eye safety, color metrology, and laser devices. While such filters generally include dielectric layers, in some applications conducting layers are provided. The dielectric or conducting layers can be deposited on a substrate by any of several known methods. For optical filter applications, layers are generally deposited by evaporation, ion-beam-assisted evaporation, or sputtering.

While evaporation and sputtering (and filters made by these processes) are satisfactory for many applications, filters for more demanding applications require control of layer thickness and layer composition that generally is not achievable with evaporation or sputtering processes. In addition, evaporation and sputtering can produce films that are stressed as deposited. A particular example of an application for which such filters and methods are unsatisfactory is narrow-bandwidth filters for a selected center wavelength as used for multiplexing and demultiplexing optical signals in wavelength-division-multiplexed (WDM) optical communication systems.

Accordingly, improved filters and methods and apparatus for manufacturing such filters are required.

### Summary

Methods for forming layers include atomic layer epitaxy (ALE), atomic layer chemical vapor deposition (ALCVD), and atomic layer deposition (ALD). For convenience, the terms ALE, ALCVD, and ALD are used interchangeably herein. In these methods, a surface of a substrate is exposed to alternating pulses of two or more precursor materials. The first precursor material binds to the surface and the second precursor material reacts with the bound first material to form a sublayer of a material from a combination of the precursor materials. Layer formation using such methods is readily controlled based on saturation of a substrate surface by exposure of the surface to one or more of the precursor materials. Because of the process control permitted by such surface saturation, active process control is not implemented in such methods and is considered unnecessary. However, process control based on such saturation cannot provide adequate layer control for high-precision optical filters. Process monitoring in such methods is difficult because layer formation is based on precursor materials accumulated on a substrate surface by exposing the surface to precursor materials in vapor form. The flow of a precursor material (usually in a vapor phase) extends throughout a reaction chamber in which a substrate is situated so that surfaces of the reaction chamber tend to accumulate deposited layers. Therefore, monitoring of layer formation through the reaction chamber is complicated by the formation of layers on any window that otherwise could be used to monitor layer formation.

Fabrication methods, apparatus, and filters that overcome the problems summarized above are set forth herein. In representative methods, a substrate surface is alternately exposed to at least two precursor materials ("precursors") in an exposure cycle, wherein the precursors provided to the substrate surface combine to form a sublayer on the substrate surface. Layers are formed by a plurality of sublayers. Based on a determination of a property or properties of at least one layer, sublayer, or combinations of layers and sublayers, a number of sublayers for a selected layer is determined and the number of exposure cycles needed to form the layers is selected.

Apparatus for forming a layer on a coating surface of a substrate include a reaction chamber configured to enclose the coating surface and to situate a second surface of the substrate to face away from an interior of the reaction chamber. The reaction chamber includes at least one or more inlets configured to supply two or more precursors to the coating surface. A precursor-exposure controller is configured to altematingly deliver pulses of two or more precursors to the coating surface in each of multiple exposure cycles, such that each sublayer is formed by a combination of two or more precursors supplied in respective precursor pulses. A process monitor is configured to measure a characteristic of the coating surface of the specimen and to provide a monitor output corresponding to the measured characteristic. A controller that includes a pulse selector is configured to select a number of cycles of precursor pulses or a number of precursor pulses to be delivered to the coating surface based on the monitor output. Alternatively, the controller selects a material or materials to be delivered to the coating surface based on the monitor output.

In additional embodiments, the reaction chamber includes a chamber wall having a perimeter aperture. The perimeter aperture is configured to retain the substrate so that the coating surface faces an interior of the reaction chamber and a second surface of the substrate faces away from the interior of the reaction chamber. In other representative embodiments, the system includes a seal situated at the perimeter aperture between the substrate and the chamber wall, and configured to impede a flow of precursors out of the reaction chamber. In still further embodiments, the reaction chamber includes a monitor window situated to avoid exposure to the precursors.

Methods of forming a layer on a substrate include alternately exposing the surface of the substrate to a first precursor and a second precursor in exposure cycles to form respective sublayers of a first material on the surface. A measurement light flux is directed to a coating surface of the substrate, and a characteristic of the sublayer or combination of sublayers is determined based on a measurement of a portion of the measurement light flux received from the measurement surface. The coating surface is exposed to a number of alternating exposures (cycles) to the first and second precursors based on the measurement of the portion of the measurement light flux received from the measurement surface. In representative embodiments, the measurement is of transmittance, reflectance, or transmittance and/or reflectance as a function of wavelength. In other embodiments, the measurement is an ellipsometric measurement.

An embodiment of an apparatus for forming a multilayer optical filter includes a reaction chamber configured to retain a substrate. The reaction chamber defines a measurement aperture. The reaction chamber includes at least one precursor inlet for admitting at least one precursor to the reaction chamber. An optical measurement system is provided that includes a source producing a measurement light flux directed to a substrate through the measurement aperture. The optical measurement system includes a receiver configured to receive a portion of the measurement light flux delivered to the measurement aperture from the substrate. A controller that is in communication with the receiver is configured to select a number of sublayers to be formed in at least one layer, wherein a sublayer is formed by an alternating exposure of the substrate to at least one precursor. The number of sublayers and the type of sublayers are determined by the controller based on a measurement of the measurement light flux directed to the receiver. In representative embodiments, the measurement light source is a laser, and the receiver includes an optical spectrum analyzer. In additional embodiments, the apparatus include a planetary system or other rotational system configured to rotate the substrate and the controller is configured to determine a rotation rate of the substrate.

Optical filters (such as wavelength-division multiplexing and demultiplexing filters) according to an embodiment are provided that include a substrate and a plurality of alternating layers of high-index and low-index materials. At least one of the layers includes a number of sublayers selected based on a measurement light flux transmitted by or reflected from the filter. The sublayer can consist essentially of a material formed by a combination of a first precursor and a second precursor.

According to another embodiment, optical filters are provided that include a substrate and a plurality of sublayers that, in combination, form a layer on the substrate. The sublayers are produced by an alternating exposure of the substrate to two or more precursors, wherein a number of the sublayers is selected based on a measurement of an optical property associated with the layer or with one or more of the sublayers. The filters can have a spectral transmittance or reflectance having a spectral bandwidth Δλ₁ of less than about 0.5 nm, wherein Δλ₁ is a full-width of the spectral transmittance or reflectance, respectively, at 0.5 dB down from a maximum spectral transmittance or reflectance.

In further representative embodiments, optical filters are provided that include a substrate and alternating layers of a high-refractive-index material and a low-refractive-index material, wherein the high-refractive-index material consists essentially of niobium oxide. In a particular embodiment, the layers of the high-index material include sublayers of the high-index material.

These and other features and advantages of the invention are described below with reference to the accompanying drawings.

### Brief Description of the Drawings

FIG. 1A is a graph of spectral transmittance for an optical filter.
FIG. 1B is a schematic sectional view of an optical filter.
FIG. 1C is a schematic sectional view of an optical filter for wavelength division multiplexing.
FIG. 1D is a schematic sectional view of an optical filter that includes a layer formed having a plurality of sublayers.
FIG. 2 is a schematic diagram of a wavelength division multiplexed optical communication system.
FIG. 3A is a schematic block diagram of a system for forming a layer on a substrate.
FIG. 3B is a schematic block diagram of a system, for forming a layer on a substrate, that includes an optical probe for monitoring an optical property of the substrate.
FIG. 3C is a partial schematic diagram illustrating a layer-forming apparatus including a reaction chamber having a monitoring extension.
FIGS. 4A-4B are plan and sectional views, respectively, of a waveguide assembly that includes waveguides defined with a layer formed with sublayers.
FIGS. 4C-4D are plan and sectional views, respectively, of a channel waveguide that includes a grating region.

### Detailed Description

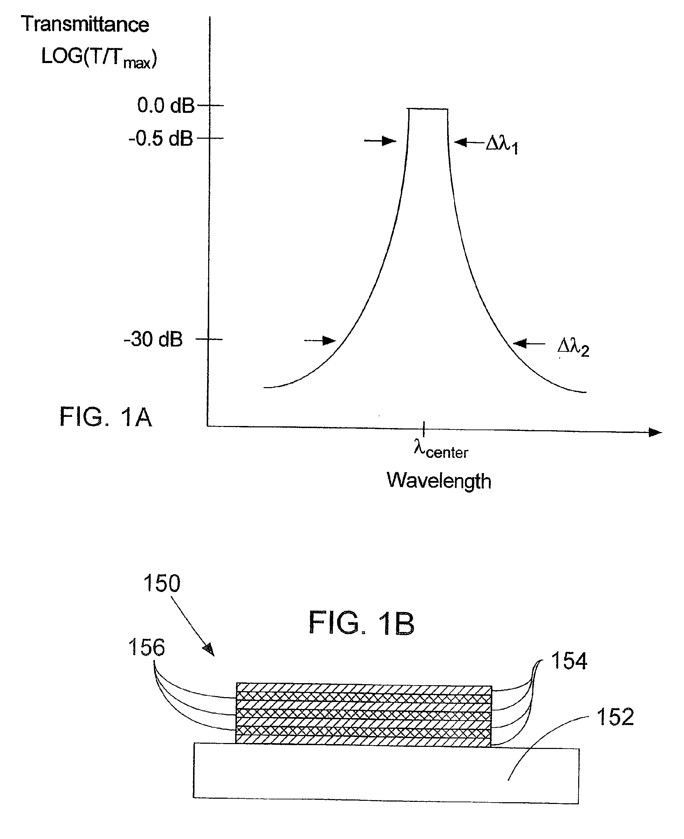

With reference to FIG. 1A, a spectral transmittance of an optical filter suitable for channel selection (channel demultiplexing) or channel combining (multiplexing) in an optical wavelength-division-multiplexed (WDM) communication system is conveniently characterized by a center wavelength λ_{center} and spectral bandwidths Δλ₁ and Δλ₂. The spectral bandwidths Δλ₁ and Δλ₂ are typically defined as a full width at 0.5 dB down from a maximum transmittance Tₘₐₓ and a full width at 30 dB down from the maximum transmittance Tₘₐₓ, respectively. The spectral bandwidths Δλ₁ and Δλ₂ are specified to permit matching an optical filter to a particular center wavelength and determining how effectively the filter rejects radiation at nearby wavelengths, respectively. For optical WDM communication systems, communication channels can be defined at 200 GHz, 100 GHz, 50 GHz, or 25 GHz channel-frequency spacings, corresponding to channel-wavelength spacings of about 1.6 nm, 0.8 nm, 0.4 nm, and 0.2 nm, respectively, in the 1500-nm optical fiber transmission window. While FIG. 1A illustrates a filter configured to exhibit a narrowband spectral transmittance, filters can be configured to exhibit narrowband reflectance, or other reflectance or transmittance features. For example, filters can be configured as gain flatteners for fiber lasers, or as beamsplitters, isolation filters, add/drop multiplexers, and pump laser isolators.

A representative optical filter 150 is illustrated schematically in FIG. 1B. The filter 150 includes a substrate 152 and alternating layers 154, 156 of a high-refractive-index material and a low-refractive-index material, respectively. For convenience, the filter 150 is illustrated with seven layers, but more or fewer layers can be provided. The layers 154, 156 are deposited so as to have respective optical thicknesses (actual thickness divided by respective refractive index) that are predetermined fractions of a design wavelength. Layers of one-half wavelength and one-quarter wavelength optical thickness are especially common, but other layer thickness can be used. Reflectance, transmittance, or other properties of the optical filter 150 depend upon the respective numbers of layers, layer thicknesses, and layer compositions.

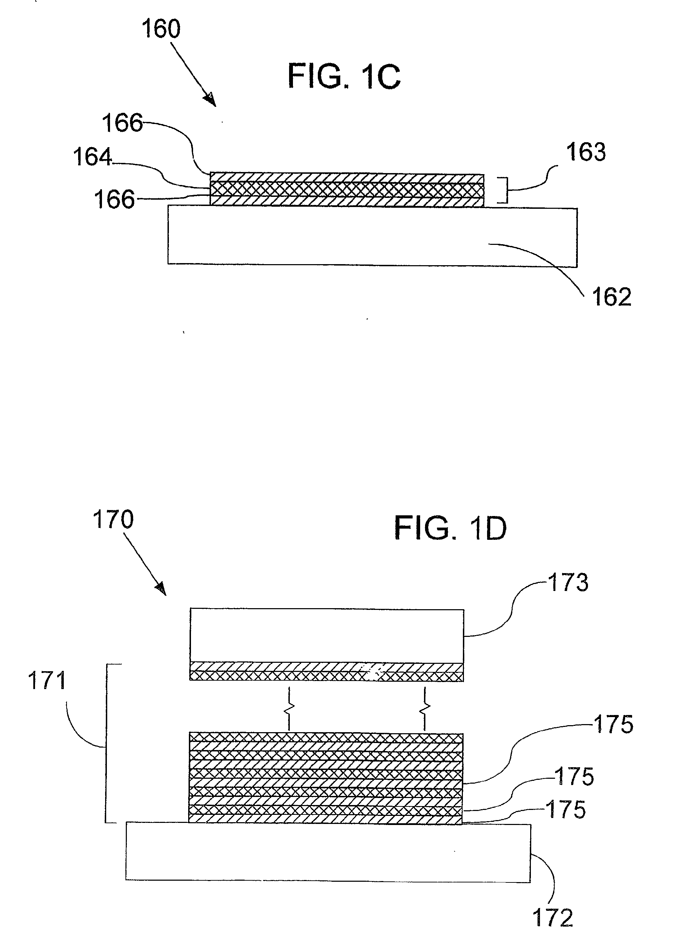

FIG. 1C illustrates a representative WDM filter 160 that includes a layer stack 163 formed on a substrate 162. The layer stack 163 includes multilayer reflectors 166 and a spacer layer 164. The spacer layer 164 has an optical thickness that is substantially equal to an integer multiple of one-half of a filter center wavelength. Each of the multilayer reflectors 166 includes alternating layers of respective materials having high and low index of refraction. Each of the layers has a respective optical thickness that is substantially equal to one-quarter of the filter center wavelength. Such reflectors are similar to the optical filters illustrated in FIG. 1B. The layer stack 163 can be repeated; other example filters include two or more filter stacks deposited on a single substrate. The layers of the additional filter stacks have substantially similar optical thicknesses. A filter having three filter stacks, suitable for WDM applications, typically has 120-180 individual layers.

With reference to FIG. 1D, a filter 170 includes a layers 171, 173 and a substrate 172. For convenience, the filter 170 is shown with only two layers but a typical filter has many layers as noted above. The layer 171 includes a plurality of sublayers 175 wherein the number of sublayers and the index of refraction of the sublayers are configured to provided a selected optical thickness. In representative examples, the sublayers are formed of the same material but in other examples two or more materials can be provided for the sublayers so that the layer 171 has an effective index of refraction that depends on the indices of refraction of the sublayers 175. As used herein, a layer having a refractive index that is a function of the refractive indices of sublayers having different refractive indices is referred to as an engineered refractive index layer or a composite refractive index layer and has an engineered or composite refractive index, respectively. Sublayers can be provided as, for example, alternating sublayers of two materials of different refractive indices. Alternatively, sublayers can be provided to form a graded refractive index layer in which refractive index increases or decreases monotonically along a layer thickness dimension, at least for some portion of the layer thickness. Layers having an inhomogeneous refractive index can also be formed. Alternatively, different sublayer materials can provide a composite refractive index that is unavailable in a layer that includes sublayers of a single sublayer material. Rugate filters can include such composite or engineered layers. Combinations of sublayers of different materials can also be used to obtain layers having other optical properties that differ from those of the sublayers. Formation of sublayers such as the sublayers 175 is described below.

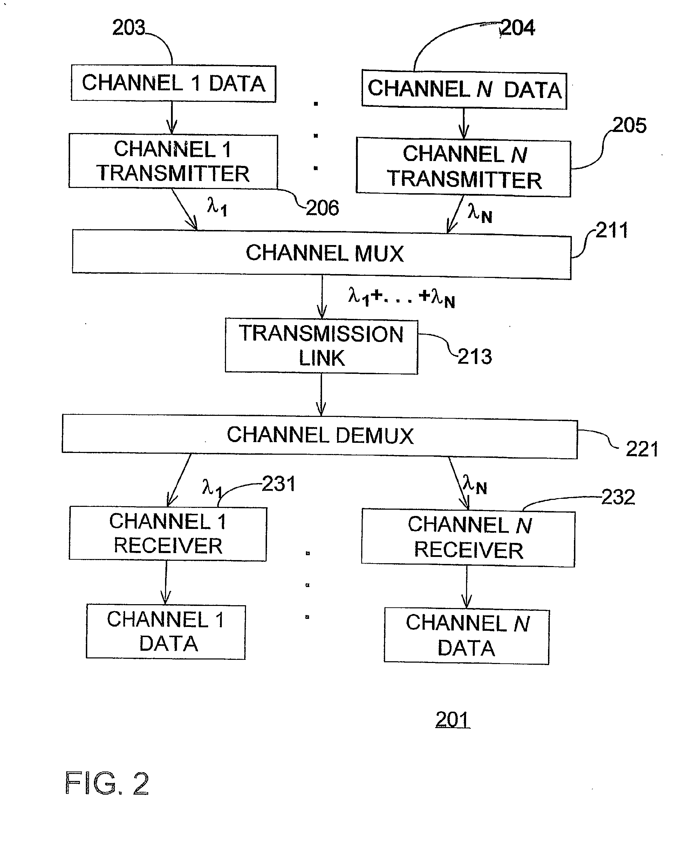

An application of such filters to a representative N-channel WDM system 201 is illustrated in FIG. 2. Data sources 203, 204 supply channel data to respective transmitters 205, 206 that produce modulated optical signals at wavelengths λ₁, λ_{N}, respectively. (For convenience, only channels 1 and N are shown in FIG. 2.) The modulated optical signals are delivered to a channel multiplexer (mux) 211 that combines the signals. The combined optical signals are transmitted through a transmission link 213, typically an optical fiber. The combined optical signals are demultiplexed by a channel demultiplexer (mux) 221 so that modulated optical signals at wavelengths λ₁, λ_{N} are delivered to respective receivers 231, 232 that recover channel-1 data and channel-*N* data. The mux 211 and the demux 221 each include optical filters such as the optical filter illustrated in FIG. 1C.

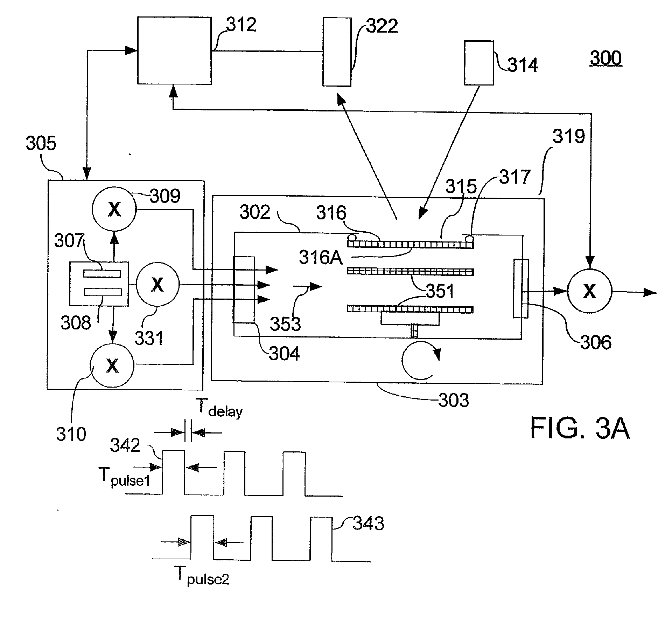

Optical filters including filters suited for use in optical muxes and demuxes can be fabricated using a system 300 as illustrated schematically in FIG. 3A. A reaction chamber 302 situated in a vacuum chamber 303 is provided with an input port 304 and an exit port 306 configured for the entry and exit of layer precursors, respectively. First and second precursors are supplied from respective sources 307, 308 in a source module 305 to the reaction chamber 302 under the control or valves 309, 310 that are controlled by a computer 312 or other control device. Typically, the computer 312 is a dedicated microcomputer such as a personal computer and is provided with interface hardware for controlling the valves and for communicating with other peripheral components. A computer-readable medium containing computer-executable instructions for the operation of the system 300 is provided for the controller 312, or the instructions can be received via a network connection, or other remote connection to a network computer or workstation.

A tunable laser 314 or other light source is provided and configured to illuminate a substrate 316 situated at a perimeter of the reaction chamber 302 at a chamber aperture 315. A seal 317 limits the flow of layer precursors from the reaction chamber 302 to the vacuum chamber 303 through the chamber aperture 315. An optical beam from the tunable laser 314 is directed to the substrate 316, and a reflected portion of the optical beam is returned to a receiver 322. The receiver 322 is configured to determine a magnitude, phase, state of polarization, or other characteristic of the reflected portion of light and to deliver an electrical signal corresponding to the selected characteristic of the reflected portion to the computer. As shown in FIG. 3A, a reflected component of the optical beam is directed to the receiver 322. Alternatively, in other examples, either or both a transmitted and a reflected component can be directed to a receiver. Generally a receiver is provided for each optical beam component exiting the reaction chamber, but a single receiver can be used by configuring an optical system (not shown) in FIG. 3A to selectively direct both components to a single receiver.

The controller 312 is in communication with the precursor source module 305. Based on measurements of, for example, temperatures or pressures associated with the precursor sources, the controller 312 confirms that a particular precursor source is within an acceptable operation range so that the associated precursor can be satisfactorily provided to the reaction chamber 302. The controller 312 is also in communication with the reaction chamber 302 and the substrate 316 to confirm that, for example, a selected reaction-chamber pressure, gas content, or temperature has been achieved. For simplicity, sensors needed to provide temperature, pressure, or other data are not shown in FIG. 3A. Also, regulators, heaters, pumps, and other components needed to establish these and other process conditions are not shown. The system 300 is configured so that the controller 312 can select one or more purge gases for purging the reaction chamber 302 via a valve 331, or can control a heating element (not shown) for cleaning surfaces of the reaction chamber.

After any needed precursor sources or combinations of precursor sources are determined by the controller 312 to be ready to supply precursors to the reaction chamber 302, and the reaction chamber 302 is prepared, the controller 312 initiates a series of exposures of a surface 316A of the substrate 316 to the selected precursors. Typically the controller 312 controls exposure of the substrate 301 to the precursors by providing one or more pulsed deliveries of precursors to the substrate 301 in an alternating manner. Referring to FIG. 3A, a series of pulses (indicated as a waveform 342) of the first precursor are supplied to the reaction chamber 302. The pulses correspond to any of precursor pressure, temperature, or volume sufficient to substantially saturate the surface 316A with the first precursor. As used herein, "saturation" of the surface by a precursor refers to a process in which any additional exposure of the surface to the precursor produces a change in a quantity of precursor on the surface that is less than that produced by a similar previous exposure. For example, lengthening the duration Tₚᵤₗₛₑ₁ of a first pulse generally does not produce a change in the coverage of the surface by the first precursor that is proportional to the change in the pulse duration. After the substrate is exposed to the first precursor, the controller 312 directs the valve 331 to close and, after a delay T_{delay}, opens the valve 331 to provide a pulse of duration Tₚᵤₗₛₑ₂ (a first pulse of a pulse sequence 343) of the second precursor to the reaction chamber 302. During a delay period T_{delay}, the reaction chamber 302 can be purged with an inert gas or other gas, or connected to a vacuum pump under the direction of the controller 312. Additional delays can also be provided. While pulses of different precursors can be produced using valves that connect and disconnect corresponding precursor sources to the reaction chamber 302, pulses of different precursors typically are separated with gas-phase diffusion barriers that include an inert gas such as nitrogen. Other materials can be introduced into the reaction chamber 302 to, for example, regulate the oxygen content of layers and sublayers.

While pulse conditions for the first precursor are selected to substantially saturate the surface, pulse conditions for the second pulse are selected so that the second precursor reacts with substantially all of the first precursor deposited on the surface 316A. After introducing pulses of each of the precursors, the surface 316A of the substrate 316 includes a sublayer of a compound of the first and second precursors. By alternating pulses as shown in FIG. 3A, parameters such as thickness, refractive index, density of each sublayer are controlled, and the properties of the layer formed by the sublayers are controlled. The sublayers are typically between about 0.05 nm and 0.5 nm thick, and multiple sublayers are formed to produce a layer of a selected optical thickness such as one-quarter or one-half wavelength. Because properties such as thickness of the sublayer are determined by monitoring the deposition process using the laser 314 and the receiver 322, the controller selects the number of sublayers to be formed in one or more layers to achieve target optical properties. Selection of a number of sublayers by, for example, adding sublayers in excess of a predetermined design, forming fewer sublayers than expected based on a predetermined design or altering sublayer composition, permits precise characterization and control of the optical coating applied to the surface 316A.

During exposure of the substrate 316 to the pulses, or during delay periods, gas-diffusion barrier intervals, or delay periods introduced for layer or sublayer evaluation, a reflected portion of the optical beam produced by the laser 314 is directed to the receiver 322. The controller 312 receives an electrical signal or other signal from the receiver 322 corresponding to the received portion of the laser beam. Based on this signal, the controller 312 adjusts processing conditions to steer the layer-formation process to produce a layer with predetermined properties, or to produce a stack of layers with predetermined properties. For example, reflectance and transmittance of a series of layers depends upon layer thickness and refractive index of the layers. Such layer properties can be controlled by adjusting the precursor source properties (such as temperature or pressure), selecting an exposure pulse width, or controlling the number of exposures used to form a particular layer. For example, if a particular layer thickness is to be achieved, the number of sublayers deposited can be varied. In other representative examples, additional sublayers can be formed, fewer sublayers can be formed, or different precursors or precursor parameters can be selected.

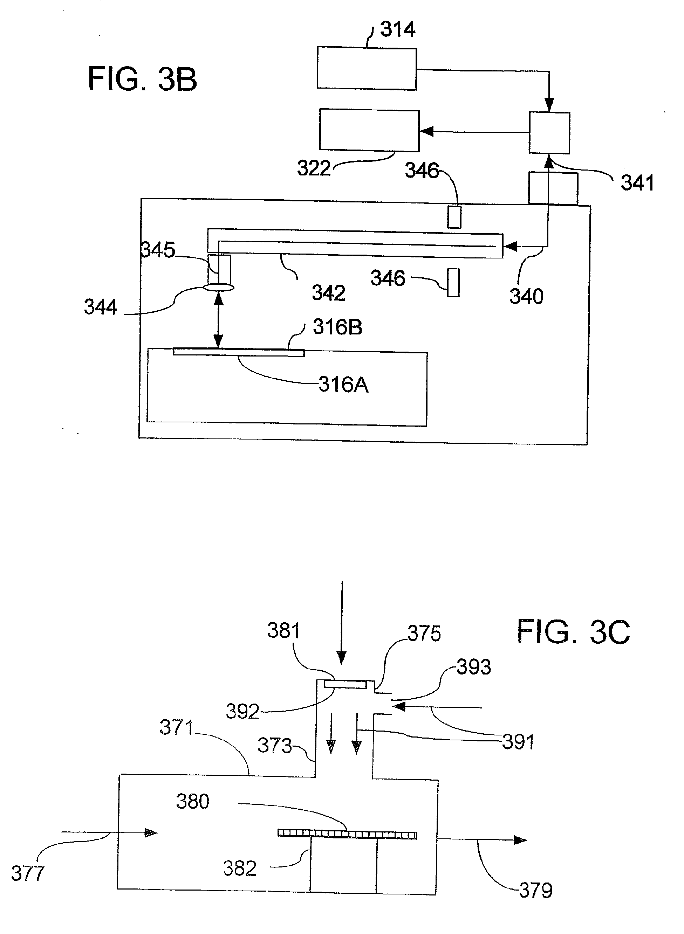

With reference to FIG. 3B, an optical monitoring system is provided that includes the receiver 322 and the laser 314. A laser beam produced by the laser 314 is directed to a proximal end 341 of an optical fiber 340 (or other light waveguide or relay optical system) that is partially retained in a probe housing 342. A lens 344 directs the laser beam from a distal end 345 of the fiber 340 to the surface 316A and receives a reflected portion of the laser beam and directs the reflected portion to the distal end 345 of the fiber 340. As illustrated in FIG. 3B, the fiber 340 delivers the laser beam to the surface 316B, receives reflected light from the surface 316A, and delivers the reflected light to the receiver 322. In other representative embodiments, an additional fiber is provided so that the laser beam is delivered to the substrate 316 and returned to the receiver 322 through separate fibers. Multimode or single-mode fibers can be used, and the fibers can be polarization-retaining. In order to reduce heating of the fiber 340 and of the housing 342, thermal baffles 346 are provided.

The system of FIG. 3A can be configured to retain multiple substrates. These substrates can be situated along or with respect to a precursor flow or precursor supply direction such that a quantity of a precursor delivered to a substrate varies with position of the substrate. For example, FIG. 3A also illustrates additional substrates 351 that are situated transverse to a precursor supply direction 353, and in other examples, substrates can be situated along such a supply direction. In addition, a single substrate can be positioned so that a quantity of precursor delivered to the surface of the substrate varies with location on the surface. Such positioning permits formation of a film having a varying property (either one or two-dimensionally varying) across the surface of the substrate. Such positioning also allows different films to be produced on separate substrates in a single film-forming step. One or more locations on a substrate surface or one or more substrate surfaces can be monitored during film formation to control formation of the film, as shown in FIG. 3B.

In a representative example, a single optical monitor is situated with respect to a selected substrate. Precursor supply to the substrate is configured so that measurement of a film being deposited on one substrate permits determination of film properties on the remaining substrates being processed simultaneously. In some systems, precursor delivery and substrate conditions are sufficiently constant throughout the reaction chamber so that many or all of the substrates being processed in the chamber receive substantially the same layers. In other examples, longitudinal or other gradients in precursor delivery to the substrates produce films having properties that vary with position along an axis of the gradient. In still other embodiments, transverse or longitudinal gradients or other non-uniformities of precursor delivery to the substrate due to precursor supply or precursor retention by the substrate results in individual substrates having respective films in which the center wavelength varies with location on the substrate. A single substrate having such a film can be divided into two or more separate filters having different respective center wavelengths. Hence, formation of a single coating can produce multiple filters for a plurality of center wavelengths.

As shown in FIG. 3A a substrate 316 is provided for determining the number of sublayers to be deposited. In other examples, a window can be situated and configured to receive substantially the same sublayers as the substrates so that a substrate is not used for monitoring. The window is typically maintained at approximately the same temperature as the substrates and is made of the same or a similar material. The laser beam that illuminates the surface onto which the sublayers are formed can have a center wavelength corresponding to a wavelength at which the filter is to be used, or have a different central wavelength. In addition, the laser beam can have a narrow spectral bandwidth, or a light beam having a wide spectral bandwidth be used. With wide spectral bandwidth illumination, the receiver can include an optical spectrum analyzer using a diffraction grating, prism, Fabry-Perot etalon, or other spectrally selective device to spectrally analyze the light returned from the substrate. Thickness, refractive index, and other properties of layers can also be determined ellipsometrically, in which case the receiver can be configured to include an ellipsometric measurement component. In conjunction with an ellipsometric or spectral analysis apparatus, the controller can include a software component adapted to determine properties of a "calculated" or "as deposited" layer, sublayer, or film, direct the formation of multiple layers according to an initial design, provide a variation of the original design, and/or reject or accept the layer as formed.

With reference to FIG. 3C, a reaction chamber 371 includes an extension 373 that terminates at an extension end 375. A window 381 is situated at the extension end 375. Within the reaction chamber 381, a substrate 380 is retained by a substrate holder 382. The length of the extension 373 and the diameter or width of the extension end 375 are selected so that precursors entering the reaction chamber 371 at an input 377 do not reach the window 381 in sufficient amounts to form layers or sublayers that obscure optical monitoring of the substrate. Alternatively, a flow of an inert gas such as N₂ can be configured to prevent accumulation of sublayer materials on a monitoring window. In an example shown in FIG. 3C, an inert gas flow 391 is directed across a substrate surface 392 through a delivery port 393.

One particularly suitable high-index material for WDM filters is niobium oxide (Nb₂O₅). Niobium oxide can be formed using H₂O and Nb(OC₂H₅)₅ as precursors, with the reaction chamber 371 maintained at a temperature of about 150-350 Celsius. The resulting niobium oxide sublayers and layers have a refractive index of about 2.3 to 2.5 and are substantially amorphous (i.e., non-crystalline) as formed on typical optical surfaces of materials such as glass and fused silica.

Additional materials suitable for producing optical filters using the selected-sublayer deposition systems of FIGS. 3A-3C include TiO₂, ZnS, Ta₂O₅, SrS, ZnO, HfO₂, CaS, Ga₂O₃, Y₂O₃, Al₂O₃, ZnF₃, SrF₂, CaF₃, BaS, CoO₂, ZnO, AlN, ZnSe, Ce₂O₃, CeO₂, Bi₂O₃, and MgO. Filters can be formed with, for example, alternating layers of aluminum oxide and niobium oxide, or aluminum oxide and tantalum oxide. Precursors for the layers can be supplied as chlorides or as organic compounds such as trimethyl aluminum and different precursors can be used to form sublayers of the same material.

Layers that comprise sublayers generally exhibit no stress at a temperature related to a temperature at which the sublayers are formed, typically at a temperature of between about 0°C and 270°C. In contrast, layers deposited by other methods exhibit stress at room temperature and are unstressed only at higher temperatures. In addition, sublayers can include some residues of the reactants used to form the sublayers. For example, sublayers formed with organic compounds typically include traces of residual carbon that can be in concentrations of a few parts per million.

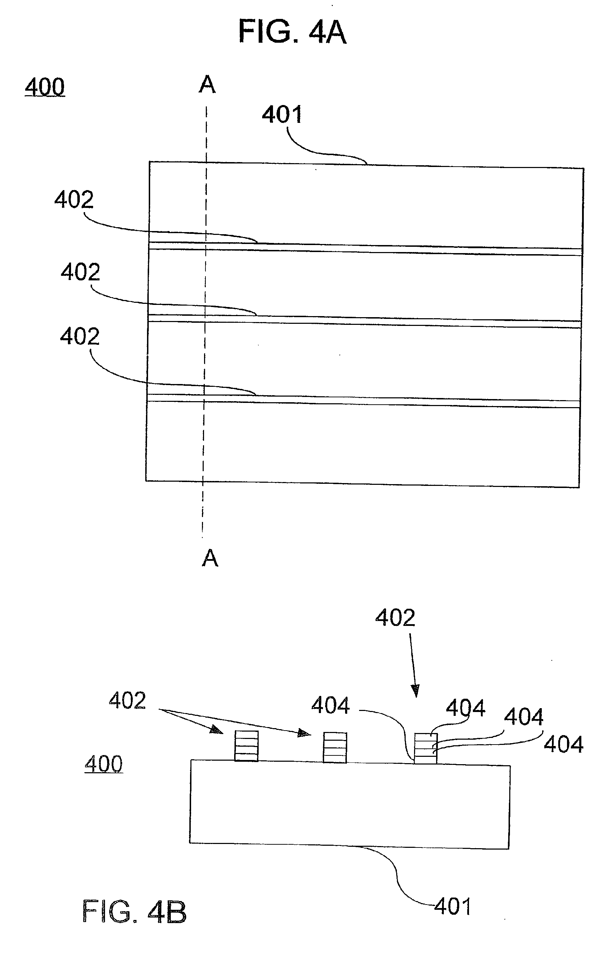

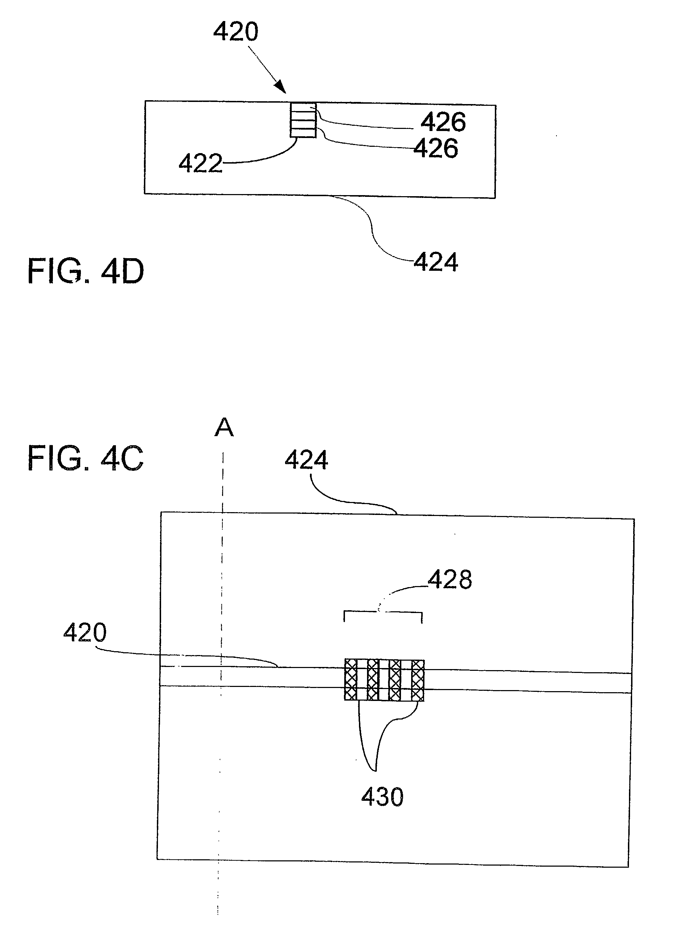

Filters such as WDM filters can be formed on planar substrates or on curved surfaces such as those of lenses, mirrors, or other optical elements. Layers that are formed by the methods described above can conformally cover a substrate and curved surfaces can be covered. In addition to layers configured for propagation of light parallel to a thickness dimension, such layers can be configure for applications in which light propagation is perpendicular to the thickness dimension. With reference to FIGS. 4A-4B, a waveguide assembly 400 includes a substrate 401 and ridge waveguides 402 defined by a layer of a dielectric or other material that includes a plurality of sublayers 404 that are formed, for example, as described above. The sublayers 404 can be of a single material or sublayers of different materials can be used to form a single layer to obtain an engineered or composite index of refraction.

Waveguides of other configurations and waveguide devices can also be formed using layers that include sublayers. FIGS. 4C-4D illustrate a representative waveguide 420 defined in an etched channel 422 of a substrate 424. The channel 422 is filled or partially filled with a layer defined by a plurality of sublayers 426. The waveguide 420 also includes a grating region 428 defined by alternating or periodic variations in refractive index or other optical property. The grating region 428 includes a plurality of grating elements 430 formed as portions of a layer defined by a plurality of sublayers, or an absence of such a layer. Patterning of layers to form waveguides and grating regions can be done with a variety of methods. For example, patterns can be formed using photolithography to define a pattern in a resist. After developing the resist, portions of the resist are removed and exposed portions of the layers are removed by an etching process such as a plasma etching or other wet or dry etching process.

While the invention has been described with reference to several embodiments, it will be apparent to those skilled in the art that these embodiments can be changed in arrangement and detail without departing from the principles of the invention and the descriptions of the embodiments is not to be interpreted to limit the invention. We claim all that is encompassed by the appended claims.

In the present specification "comprises" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A system for forming a layer on a coating surface of a substrate, comprising:
a reaction chamber configured to enclose the coating surface of the substrate, the reaction chamber including at least one inlet configured to supply at least two precursors to the coating surface, the precursors being reactive with each other in the reaction chamber to produce a layer material;
a precursor exposure controller configured to alternatingly deliver pulses of the at least two precursors to the coating surface, wherein the layer is formed by reaction of the precursors with accumulation of the layer material on the coating surface;
a monitor configured to measure a characteristic of the coating surface of the specimen during or after layer formation and to provide a monitor output corresponding to the measured characteristic; and
a controller connected to the monitor, the controller including a pulse selector configured to select a number of pulses delivered to the coating surface based on the monitor output.

2. A system according to Claim 1, wherein the reaction chamber includes a chamber wall having a perimeter aperture and configured to retain the substrate so that the coating surface faces an interior of the reaction chamber and a second surface of the substrate faces away from the interior of the chamber.

3. A system according to Claim 2, further comprising a seal situated at the perimeter aperture between the substrate the chamber wall, the seal being configured to impede flow of precursors out of the reaction chamber.

4. A system according to any preceding claim, wherein the reaction chamber includes a monitor window situated to avoid exposure of the monitor window to at least one precursor.

5. A system according to Claim 4, further comprising a flow shield configured such that a monitor window situated relative to the flow shield is located substantially outside the flow of a precursor.

6. A system according to any preceding claim, wherein the monitor is configured to measure an optical property of the coating surface.

7. A system according to Claim 6, wherein the optical property is reflectance or transmittance.

8. An apparatus for forming a multilayer optical filter, the apparatus comprising:
a reaction chamber configured to retain a substrate, the reaction chamber defining a monitor aperture:
at least one precursor inlet for admitting at least one precursor to the reaction chamber;
at least one exit port for removing the precursor from the reaction chamber;
an optical measurement system comprising a source configured to produce a measurement light flux and to direct the light flux to the monitor-aperture, and a receiver configured to receive a portion of the measurement light flux from the monitor aperture; and
a controller in communication with the receiver and configured to select a number of alternating exposures of the substrate to at least one reactant based on a measurement of the measurement light flux returned to the receiver.

9. An apparatus according to Claim 8, wherein the source is a laser.

10. An apparatus according to Claim 8 or 9, wherein the receiver includes an optical spectrum analyser.

11. An apparatus according to any one of Claims 8 to 10, further comprising a planetary system configured to rotate the substrate in the reaction chamber.

12. An apparatus according to Claim 11, wherein the controller is configured to determine a rotation rate of the substrate.

13. A reaction chamber for atomic layer expitaxy, comprising:
an exterior wall;
an aperture defined in the exterior wall;
a substrate holder situated at the aperture; and
a seal situated to impede a flow of precursors between the substrate and the exterior wall.

14. A method of forming a layer on a substrate, comprising:
delivering a measurement light flux to a surface of a substrate;
alternately exposing the surface of the substrate to a first precursor and a second precursor, the first and second precursors being reactive with each other to form a first material;
allowing the first and second precursors to form a sublayer of the first material on the surface; and
determining a characteristic of the sublayer or of a combination of the sublayer with earlier formed sublayers on the surface, based on a measurement of a portion of the measurement light flux received from the surface.

15. A method according to Claim 14, further comprising the step of exposing the surface of the substrate to a number of alternating exposures, the number being based on a measurement of the portion of the measurement light flux.

16. A method according to Claim 15, wherein the step of determining a characteristic of the sublayer or of a combination of the sublayer with earlier formed sublayers on the surface is based on a measurement of a portion of the measurement light flux received from a portion of the surface distinct from the portion at which the characteristic is determined.

17. A method according to Claim 15 or 16, wherein the measurement is a measurement of transmittance or reflectance.

18. A method according to Claim 15 or 16, wherein the measurement is a measurement of transmittance or reflectance as a function of wavelength.

19. A method according to any one of Claims 15 to 18, wherein the measurement is an ellipsometric measurement.

20. A computer program comprising computer program code means adapted to select a number of sublayers formed in atomic layer deposition based on a measurement of a substrate when said program is run on a computer.

21. A computer program comprising computer program code means adapted to perform all the steps of Claim 14 when run on a computer.

22. A computer program as claimed in Claims 20 or 21, embodied on a computer-readable medium.

23. A wavelength-division filter, comprising a plurality of alternating layers of high-index and low-index materials, wherein at least one of the layers includes a number of sublayers selected based on a measurement light flux transmitted by or reflected from the filter.

24. A wavelength-division filter according to Claim 23, wherein the sublayer consists essentially of a combination of a first precursor and a second precursor.

25. An optical filter, comprising:
a substrate
a plurality of sublayers that combine to form at least one layer on the substrate, the sublayers produced by an alternating exposure of the substrate to two or more precursors, wherein a number of the sublayers is selected based on a measurement of an optical property associated with the layer or one or more of the sublayers.

26. An optical filter according to Claim 24 or 25, wherein the sublayers are configured to produce a spectral transmittance based on a gain spectrum of an optical amplifier.

27. An optical filter according to Claim 25 or 26, wherein the filter has a spectral transmittance or reflectance having a spectral bandwidth Δλ₁ of less than about 1.0nm, wherein Δλ₁ is a full-width of the spectral transmittance or reflectance, respectfully, at 0.5 dB down from a maximum spectral transmittance or reflectance.

28. An optical filter according to any one of Claims 25 to 27, wherein the spectral bandwidth is less than about 0.5nm.

29. An optical filter according to any one of Claims 25 to 28, wherein the spectral bandwidth is less than about 0.1nm.

30. An optical filter according to any one of Claims 25 to 29, wherein at least one layer consists essentially of niobium oxide.

31. An optical filter, comprising:
a substrate; and
alternating layers of a first material having a first refractive index and a second material having a second refractive index, wherein the first material consists essentially of niobium oxide.

32. An optical filter according to Claim 30 or 31, wherein the second material consists essentially of aluminum oxide.

33. An optical filter according to Claim 30 or 31, wherein the layers of the first material include at least one sublayer.

34. An optical layer, comprising a plurality of sublayers of at least two different sublayer materials, wherein the optical properties of the layer are a function of the optical properties of the sublayer materials.

35. An optical layer according to Claim 34, wherein the layer has an entrance surface and an exit surface configured to receive a light flux and emit the received light flux, respectively, wherein an optical property of the layer changes monotonically along a thickness dimension that is substantially parallel to the entrance surface or the exist surface.

36. An optical layer according to Claim 35, wherein the optical property that changes monotonically is refractive index.
